# EUROPÄISCHE PATENTSCHRIFT

(11) **EP 2 820 098 B1**
(45) Veröffentlichungstag und Bekanntmachung des Hinweises auf die Patenterteilung: **04.04.2018**
(21) Anmeldenummer: 13705487.0
(22) Anmeldetag: 22.02.2013
(51) Int. Cl.: B32B 37/12, C09J 7/00, C09J 7/02, C09J 5/06, C09J 175/04

(54) **VERWENDUNG EINES LATENTREAKTIVEN KLEBEFILMS ZUR VERKLEBUNG VON ELOXIERTEM ALUMINIUM MIT KUNSTSTOFF**
USE OF A LATENTLY REACTIVE ADHESIVE FILM FOR ADHESIVE BONDING OF ELOXATED ALUMINIUM TO PLASTIC
UTILISATION D'UN FILM ADHÉSIF À RÉACTIVITÉ LATENTE POUR LE COLLAGE DE PLASTIQUE SUR DE L'ALUMINIUM ANODISÉ

(30) Priorität: 01.03.2012 DE 102012203249
(43) Veröffentlichungstag der Anmeldung: 07.01.2015
(73) Patentinhaber: tesa SE, 22848 Norderstedt (DE)
(72) Erfinder: SCHMITZ-STAPELA, Daniel, 22529 Hamburg (DE); DOLLASE, Thilo, 22397 Hamburg (DE); REITER, Sven, 22049 Hamburg (DE); HANNEMANN, Frank, 22047 Hamburg (DE)
(86) Internationale Anmeldenummer: PCT/EP2013/053542
(87) Internationale Veröffentlichungsnummer: WO 2013/127697

(56) Entgegenhaltungen:
- EP-A1- 1 988 111
- WO-A1-93/25599
- WO-A1-99/29755
- DE-A1- 2 304 126
- DE-A1-102004 033 728

## Beschreibung

Die Erfindung betrifft die Verwendung eines Produktes mit mindestens einer Schicht eines latentreaktiven Klebefilms, der eine thermoplastische Komponente enthält, die funktionelle Gruppen enthält, die mit Isocyanat reagieren können, und eine Isocyanat-haltige Komponente, die partikulär in die thermoplastische Komponente eindispergiert vorliegt und im Bereich der Partikeloberfläche im Wesentlichen desaktiviert ist. Die Erfindung betrifft ferner ein Verfahren zur Herstellung eines Flächenelements mit mindestens einer Klebeschicht und mindestens einem temporären Träger oder mit mindestens zwei Klebeschichten und mindestens einem Permanentträger, wobei mindestens eine Klebeschicht ein latentreaktiver Klebefilm ist, bestehend aus einer latentreaktiven Formulierung, die eine thermoplastische Komponente, die funktionelle Gruppen enthält, die mit Isocyanat reagieren können, und eine Isocyanat-haltige Komponente, die partikulär in die thermoplastische Komponente eindispergiert vorliegt und im Bereich der Partikeloberfläche im Wesentlichen desaktiviert ist, enthält.

In modernen Geräten der Consumer-Elektronik müssen oftmals verschiedene Bauteile zum Teil mit nur sehr geringen Stegbreiten miteinander verklebt werden. Die Verklebungsstärken von Haftklebebändern reichen dabei oft nicht aus, so dass in diesen Fällen häufig auf reaktive Flüssigkleber zurückgegriffen wird. Die Verwendung von Flüssigklebern ist jedoch mit einigen Nachteilen verbunden, da sie mit erheblichen Geruchsbelastungen verknüpft ist. Außerdem sind Flüssigkleber schwer zu handhaben. Daher werden Klebesysteme gesucht, die einen geringen Dampfdruck aufweisen und für eine sauberere Verarbeitung in flächiger Form zur Verfügung stehen. Dazu bieten sich hitzeaktivierbare Folien (HAF) an. Da auch thermosensitive Substrate miteinander verklebt werden sollen, besteht der Bedarf, HAF anzubieten, die schon bei sehr geringen Temperaturen (T < 100 °C) verarbeitet werden können

Eine Verklebung, für die in den letzten Jahren insbesondere im Electronics-Bereich, so zum Beispiel bei Mobiltelefonen oder sogenannten Laptop-Computern, zunehmend Bedarf entsteht, ist die Verklebung von eloxiertem Aluminium und Kunststoff. Eloxiertes Aluminium gewinnt als Dekormaterial bei Elektronik-Geräten immer weiter an Bedeutung. Sogenanntes eloxiertes oder auch anodisiertes Aluminium, d.h. mit dem Eloxal-Verfahren verarbeitetes Aluminium ist Aluminium, an dessen Oberfläche eine oxidische Schutzschicht durch anodische Oxidation des Aluminiums gebildet wurde. Dabei wird im Gegensatz zu den galvanischen Überzugsverfahren die Schutzschicht nicht auf dem Werkstück niedergeschlagen, sondern durch Umwandlung der obersten Metallschicht ein Oxid bzw. ein Hydroxid gebildet. Diese weist daher eine besonders gute Verbindung zum Aluminium auf. Es entsteht eine 5 bis 25 µm dicke Schicht, die tiefere Schichten solange vor Korrosion schützt, wie keine Lücken, beispielsweise durch mechanische Beschädigung, in dieser Schicht entstehen. Nachteilig an eloxiertem Aluminium ist dessen thermische Empfindlichkeit. Da das Aluminiumoxid einen anderen Ausdehnungskoeffizienten aufweist als das Aluminium selbst und dabei spröde ist, zeigt die Aluminiumoxidschicht bei Wärmeeinfluss bereits bei Temperaturen um 100°C Spannungsrisse, d.h. es entstehen die oben erwähnten unerwünschten Lücken in der Schutzschicht. Thermische Beanspruchung führt zudem bereits in diesem Temperaturbereich zu optischen Defekten, was bei Dekorelementen unerwünscht ist.

Die EP 23 04 126 A1 befasst sich mit der Herstellung einer Verbindung zwischen einem eloxierten Aluminium-Formteil und einem aus Kunststoff bestehenden Teil. Es wird erkannt, dass das eloxierte Bauteil bei zu hohen Verklebungstemperaturen optisch/strukturell geschädigt wird. Als Lösung wird vorgeschlagen, das Aluminiumteil und den Kunststoff mit einem hitzeaktivierbaren Klebstoff zu verkleben und erst danach die freie Aluminiumfläche des Aluminiumteils zu eloxieren.

Für die Verklebungsfestigkeit auf einem Substrat sind im Bezug auf das Substrat vor allem die chemischen und physikalischen Oberflächeneigenschaften entscheidend. Eloxiertes Aluminium stellt daher für die Verankerung einer Klebeschicht auf seiner Oberfläche eher eine Keramik (Aluminiumoxid- und Aluminiumhydroxidgruppen) dar als ein Metall, mit den spezifischen Herausforderungen, die an die Verankerung von Klebeschichten auf Keramik verbunden sind und eher weniger den Herausforderungen, die an die Verankerung von Klebeschichten auf Metallen verbunden sind.
Die Heißverpressung von HAF-Stanzlingen ist inzwischen etablierte Praxis und z. B. aus der Verklebungen von Chipmodulen in Chipkarten bekannt. Die Heißverklebung von Handygehäusen aus Polycarbonat mit einem Aluminium-Dekorstück ist in DE 10 2005 035 905 A1 der Anmelderin beschrieben. Hier kommen Verpresstemperaturen von 180 °C zum Einsatz. Eloxiertes Aluminium ist für Verklebungstemperaturen von 180 °C zu thermosensitiv und in der Schrift folglich auch nicht explizit genannt.

DE 10 2009 006 935 A1 der Anmelderin beschreibt hitzeaktivierbare Folien enthaltend einen Vliesträger zur Verklebung von Metallen und Kunststoffen. Es wird dabei auch anodisiertes (eloxiertes) Aluminium aufgeführt. Bevorzugt werden thermoplastische Materialien mit einer Schmelztemperatur oberhalb 85 °C verwendet. Diese Temperatur ist für die Verklebung von eloxiertem Aluminium allerdings bereits zu hoch. Es werden thermoplastische Polyurethane genannt, nicht jedoch explizit solche, die aus wässriger Dispersion erhalten werden. Als Reaktivharze können zwar Isocyanate zum Einsatz kommen. Eine besondere Behandlung der Isocyanate ist allerdings nicht genannt. Auch ist diese Reaktivharz-Komponente als Zusatzkomponente zum thermoplastischen Polyurethan erwähnt; die thermoplastische Matrix selbst ist kein reaktives System.

WO 93/25599 A1 (Thomas Abend) offenbart Formulierungen für latentreaktive Polyurethan-Systeme, die desaktivierte Polyisocyanate, die bei Temperaturen oberhalb 55 °C Reaktivität aufweisen, und Polymere enthalten, die bei Temperaturen oberhalb 40 °C schmelzbar sind und mit Isocyanat reagieren können. Diese Formulierungen können auf Substrate beschichtet werden, die dann verklebt werden können. Sie können auch als trägerfreier Film ausgeformt werden, der dann auf ein zu verklebendes Substrat auflaminiert werden kann. Klebsysteme dieser Art dienen zum Verbinden, Dichten, Laminieren oder Beschichten von Holz, Kunststoffen, Metallen, Glas, Textilien, synthetischen Flächengebilden, Karton, Papier und Folien. Diese Werkstoffe werden nicht genauer definiert. Eine Kunststoff/Metall-Kombination wird nicht genannt. Auch eloxiertes Aluminium ist nicht erwähnt.

J. Büchner, W. Henning, Adhäsion, 2007, 51(6), 16-21 beschreibt Trocknungsprozesse für wässrige latentreaktive Polyurethan-Dispersionen sowie Verpresskonzepte für die Verklebung von zwei Substraten. Als Beispielsubstrate werden PVC, Leder und MDF (mitteldichte Holzfaserplatten) genannt. Verklebungen von Metall/Kunststoff-Kombinationen werden nicht genannt, eloxiertes Aluminium ist nicht aufgeführt.

DE 10 2010 013 145 A1 (Lohmann) beschreibt Klebemassen, die hitzeaktivierbar und latentreaktiv sind. Bei Raumtemperatur weisen sie leichte Haftklebrigkeit auf und nach einer ersten Erwärmung und Abkühlung noch für eine gewisse Zeit Klebrigkeit. Bevorzugt basieren diese Klebemassen auf Polyurethanen. Als zu verklebende Substrate werden Metalle und Kunststoff genannt, ohne dass diese weiter spezifiziert werden, und es wird besonders auf die Anwendung hingewiesen, in der Elektronikindustrie hitzeempfindliche Kunststoffe zu verkleben. Eine Kunststoff/Metall-Kombination wird nicht genannt, eloxiertes Aluminium ist nicht erwähnt.

Die WO99/29755 (Thomas Abend) beschreibt reaktive Polyurethan-Klebesysteme auf Basis wässriger Polyurethan-Dispersionen. In die Matrix eines thermoplastischen Polyurethans, das noch funktionelle Gruppen für eine Reaktion mit Isocyanaten trägt, sind Polyisocyanat-Partikel, die an ihrer Oberfläche deaktiviert sind, eindispergiert. Bei einer ersten Temperatur schmilzt das thermoplastische Polyurethan. Bei einer Temperatur darüber löst sich die desaktivierte Partikeloberfläche auf und die Isocyanatgruppen können mit den funktionellen Gruppen des thermoplastischen Polyurethans reagieren. Als für die Verklebung geeignete Substrate sind allgemein Metalle, Kunststoffe, Glas, Holz, Holzverbundstoffe, Karton, Folien, synthetische Flächengebilde und Textilien genannt. Weder wird die Möglichkeit der Kombination der Materialien genannt noch ist eloxiertes Aluminium angesprochen.

Keine der genannten Schriften bietet eine Lösung für die Verklebung von eloxiertem Aluminium mit Kunststoff. Gesucht ist daher nach wie vor ein geeignetes Verklebungsmittel zur Verklebung von eloxiertem Aluminium mit Kunststoff, das in flächiger Form zur Verfügung gestellt werden kann, bei geringer Temperatur oberhalb Raumtemperatur, d.h. bei einer Temperatur auch unterhalb 85°C, auf ein Substrat (eloxiertes Aluminium oder Kunststoff) aufgebracht werden kann und das nach thermischer Verpressung mit dem zweiten Substrat (Kunststoff oder eloxiertes Aluminium) anwendungstechnisch den sog. Push-out-Test besteht, und zwar sowohl vor als auch nach spezieller Feucht/WärmeLagerung. Diese Anforderungen sind typisch für die Qualifikation von Verklebungen im Bereich der Consumer-Elektronik.

Die Verklebung eines polaren Kunststoffs (z. B. Polycarbonat oder PMMA) mit einem für Feuchtigkeit impermeablen Substrat (hier eloxiertes Aluminium) birgt spezielle Schwierigkeiten. Verbundlaminate dieser Art werden in Feucht/Wärme-Lagerung stark beansprucht, da der polare Kunststoff eine beträchtliche Menge an Feuchtigkeit aus der Umgebung aufnehmen kann. Diese Feuchtigkeit drückt auf die mit dem Kunststoffsubstrat in Kontakt stehende Klebefilmoberfläche. Bis zu einem bestimmten Grad kann der Klebefilm Feuchtigkeit aus dem Kunststoff aufnehmen und auch wieder an die Umgebung abgeben. Jedoch kann diese Feuchtigkeit in einer Verbindung Kunststoff/eloxiertes Aluminium, da der Klebefilm rückseitig ein für Feuchtigkeit impermeables Substrat (eloxiertes Aluminium) trägt, nicht vollflächig sondern lediglich über die Stirnseiten entweichen. Es besteht die Gefahr, dass der Klebefilm sich lokal und partiell von der Kunststoffoberfläche ablöst, was unerwünscht ist. Man kann daher zu dem Schluss kommen, dass sich als Verklebungsmittel eine Klebemasse anbietet, die selbst einen eher geringen Feuchtigkeitsgehalt aufweist und nicht aus wasserbasierender Dispersion erhalten wird, bei der trotz Trocknung die Möglichkeit substanzieller Restfeuchte besteht.

Zudem hat sich gezeigt, dass Feuchtigkeit bei Metallen und insbesondere bei eloxiertem Aluminium die Tendenz haben kann, zwischen die Oberfläche des eloxierten Aluminiums, also die typischerweise 5 µm bis 25 µm dicke Keramikschicht und die Klebefilmoberfläche zu kriechen, was zu einem Versagen der ansonsten guten Verklebungsleistung führen kann. Die Verklebung von eloxiertem Aluminium mit Kunststoff stellt also eine besonders hohe Anforderung an eine aufzufindende Verklebungslösung. Für das System Aluminium-Metall/Kunststoff geeignete Klebemittel können nicht notwendigerweise herangezogen werden, da das Aluminiumoxid der Oberflächenschicht des eloxierten Aluminiums gänzlich andere Eigenschaften als das metallische Aluminium aufweist, z.B. deutlich spröder ist als letzteres.

Überraschender Weise wurde gefunden, dass ein Produkt mit mindestens einer Schicht eines latentreaktiven Klebefilms, der eine thermoplastische Komponente, die eine Schmelztemperatur T(Schmelz) mit 35°C ≤ T(Schmelz) ≤ 90°C, insbesondere 40°C≤ T(Schmelz) ≤ 60°C, aufweist und funktionelle Gruppen enthält, de mit Isocyanat reagieren können, und eine Isocyanat-haltige Komponente, die partikulär, insbesondere feinteilig (mit einer Partikelgrößenverteilung mit d₅₀ < 50 µm, insbesondere < 15 µm) partikulär, in die thermoplastische Komponente eindispergiert vorliegt und im Bereich der Partikeloberfläche im Wesentlichen desaktiviert ist, wobei die Partikel eine Anspringtemperatur T(Anspring) von 40°C ≤ T(Anspring) ≤ 100°C, insbesondere 45°C≤ T(Anspring) ≤ 90°C, ganz besonders bevorzugt 45°C≤ T(Anspring) ≤ 75°C, aufweisen und wobei T(Anspring) ≥ T(Schmelz) ist, enthält, zur Verklebung von eloxiertem Aluminium mit Kunststoff sehr gut geeignet ist. Nach thermischer Verpressung besteht die geforderte Verklebungsfestigkeit von eloxiertem Aluminium und Kunststoff sowohl vor als auch nach Feucht/Wärme-Lagerung.

Dabei ist T(Schmelz) die Schmelztemperatur der thermoplastischen Komponente und T(Anspring) die Temperatur, bei der die Isocyanat-Gruppen der in die thermoplastische Komponente eindispergierten Partikel in die Lage versetzt werden, mit den funktionellen Gruppen des thermoplastischen Polyurethans zu reagieren.

Solche latentreaktiven Klebefilme basieren vorzugsweise auf sogenannten 1K latentreaktivem Polyurethan, erhalten aus wässriger Polyurethan-Dispersion, bevorzugt Dispercoll U® der Fa. Bayer AG. Die latentreaktiven Klebefilme enthalten eine thermoplastische Komponente, die eine Schmelztemperatur, T(Schmelz), aufweist und funktionelle Gruppen enthält, die mit Isocyanat reagieren können, sowie eine Isocyanat-haltige Komponente, die partikulär, insbesondere feinteilig partikulär (bevorzugt mit einer Partikelgrößenverteilung mit d₅₀ < 50 µm, insbesondere < 15 µm), in die thermoplastische Komponente eindispergiert vorliegt und im Bereich der Partikeloberfläche im Wesentlichen desaktiviert ist. Die Partikel weisen eine Anspringtemperatur, T(Anspring), auf, für die gilt T(Schmelz) ≤ T(Anspring). T(Schmelz) liegt zwischen 35 °C und 90 °C, bevorzugt zwischen 40 °C und 60 °C. T(Anspring) liegt zwischen 40 °C und 100 °C, bevorzugt zwischen 45 °C und 90 °C, ganz besondersbevorzugt zwischen 45 °C und 75 °C. Die latentreaktiven Klebefilme sind bevorzugt bei Raumtemperatur nicht haftklebrig, um eine gute (Re-)Positionierbarkeit zu gewährleisten, wie es für andere HAF-Systeme bereits in Verarbeitungsprozessen etabliert ist.

Besonders bevorzugt ist T(Schmelz) < T(Anspring), da so ein ungewolltes Auslösen der Vernetzungsreaktion bei der Herstellung des bahnförmigen Klebeprodukts sicher vermieden werden kann.

Als thermoplastische Komponente kommen vorzugsweise solche Verbindungen zum Einsatz, die mit OH- und/oder NH₂-Gruppen funktionalisiert sind. Sehr bevorzugt handelt es sich bei der thermoplastischen Komponente um zumindest ein semikristallines Polyesterurethan.

Der latentreaktive Klebefilm enthält dabei bevorzugt eine anionische, hochmolekulare Polyurethan-Dispersion als thermoplastische Komponente, die eine Schmelztemperatur T(Schmelz) mit 35°C ≤ T(Schmelz) ≤ 90°C, insbesondere 40°C≤ T(Schmelz) ≤ 60°C, aufweist und funktionelle Gruppen enthält, die mit Isocyanat reagieren können, beispielweise in Form kommerziell erhältlicher Produkte aus der oben erwähnten Dispercoll U-Familie; wie Dispercoll U53, Dispercoll U54, Dispercoll U56, Dispercoll U 8755, Dispercoll U XP 2815, Dispercoll VP KA 8758, , Dispercoll U XP 2682, Dispercoll U XP 2701, Dispercoll U XP 2702, Dispercoll U XP 2710 und/oder Dispercoll BL XP 2578 (Dispercoll ist eine eingetragene Marke der Bayer AG).

Der latentreaktive Klebefilm enthält dabei zudem bevorzugt Toluylen-diisocyanat-Verbindungen (TDI-Verbindungen), wie Dispercoll BL XP 2514 (TDI-Dimer) und/oder Aqualink U (Dispersion von blockiertem TDI-Dimer) und/oder Isophoron-Diisocyanate (IPDI), wie Aqualink D (Dispersion von blockiertem IPDI-Trimer) als Isocyanat-haltige Komponente, die partikulär, insbesondere feinteilig partikulär, in die thermoplastische Komponente eindispergiert vorliegt und im Bereich der Partikeloberfläche im Wesentlichen desaktiviert ist. Eingesetzt werden die Diisocyanate beispielsweise in Form der wässrigen Suspensionen des jeweiligen latent-reaktiven Feststoff-Isocyanats. Aqualink wird von der Fa. Aquaspersions angeboten. Insbesondere in Kombination mit anionischen, hochmolekularen Polyurethan-Dispersionen als thermoplastischer Komponente (wie die genannten Dispercoll U-Produkte) können die vorgenannten Diisocyanat-Produkte als Vernetzer-Komponente verwendet werden.

Der latentreaktive Klebefilm kann darüber hinaus weitere Formulierungsbestandteile enthalten. Dazu zählen Verdicker, Netzmittel, Entschäumer, Füllstoffe (z. B. thermisch leitende), Pigmente, Katalysatoren, Alterungsschutzmittel, Lichtschutzmittel und weitere Polymere zur Einstellung spezieller Klebeeigenschaften. Spezielle Klebeeigenschaften lassen sich beispielsweise durch Zumischen wässriger Dispersionen amorpher Polymere (z. B. Polyetherurethane oder Polyacrylate) und/oder durch Zumischen wässriger Harzdispersionen (insbesondere basierend auf Kolophoniumestern) einstellen.

Klebeprodukte mit zumindest einer Schicht eines latentreaktiven Klebefilms entsprechend obiger Definition wie bevorzugt Dispercoll U sind überraschenderweise für die Verklebung von eloxiertem Aluminium und Kunststoff geeignet, obwohl die Polyurethanrohstoffe aus wässriger Dispersion erhalten werden und das System somit zusätzliches Wasser aufweisen kann, das der Stabilität und Haltbarkeit der Klebeverbindung eigentlich entgegenwirken müsste.

Bei dem erfindungsgemäßen Produkt kommt zumindest eine Schicht eines latentreaktiven Klebefilms zum Einsatz mit einer Schichtdicke zwischen zumindest 10 µm und höchstens 500 µm, bevorzugt zwischen zumindest 20 µm und höchstens 250 µm.

Bei den erfindungsgemäßen Produkten handelt es sich um doppelseitig klebende Produkte. Solche Produkte enthaltend zumindest einen latentreaktiven Klebefilm kommen im einfachsten Fall in einschichtiger Form zum Einsatz, aufgebracht auf ein wieder ablösbares (temporäres) Trägermaterial. Als temporäres Trägermaterial bieten sich alle Trennfolien und -papiere an, die aus dem Stand der Technik bekannt sind und ein- oder beidseitig mit einer Trennschicht ausgerüstet sind. Silikonisierte Papiere werden bevorzugt. Papiere können auch ein- oder beidseitig mit Polyethylen oder Polypropylen beschichtet sein. Es können auch zwei Lagen eines wiederablösbaren Trägermaterials zum Einsatz kommen, so dass Ober- und Unterseite des Klebefilms abgedeckt sind, auch wenn das Produkt nicht aufgewickelt vorliegt.

Produkte enthaltend zumindest einen latentreaktiven Klebefilm können zudem ein weiteres Trägermaterial enthalten, das auch nach Verklebung im Produkt verbleibt (Permanentträger). Hierzu bieten sich ebenfalls Folien und Papiere aber auch Gelege, Gewebe und Gewirke an. Die Oberflächen dieser Trägermaterialien können jeweils unabhängig voneinander chemisch (Primer, Plasma) und/oder physikalisch (Corona, Flamme, Plasma) so vorbehandelt sein, dass eine besonders gute Verankerung des latentreaktiven Klebefilms auf dem Trägermaterial erreicht werden kann. Vliese werden bevorzugt. Eine Lage eines Permanentträgers reduziert eine etwaige Neigung des Klebefilms, im geschmolzenen Zustand unter Verpressbedingungen seitlich aus der Verklebungsfuge ausgequetscht zu werden (siehe hierzu DE 10 2009 006 935 A1).

Als Trägervlies werden in diesem bevorzugten Fall Flächengebilde aus einzelnen Fasern eingesetzt. Dabei können alle nach der Norm DIN EN 29092 definierten Vliese eingesetzt werden. Das Vlies besteht aus lose zusammengelegten Fasern, welche noch nicht miteinander verbunden sind. Die Festigkeit resultiert aus der Faser-eigenen Haftung.

Man differenziert auch zwischen verfestigten und nicht-verfestigten Vliesen. Die Fasern sind statistisch verteilt. Die Vliese lassen sich nach den Fasermaterialien differenzieren. Als Fasermaterialien können mineralische Fasern, wie z.B. Glas, Mineralwolle oder Basalt, tierische Fasern, wie z.B. Seide oder Wolle, pflanzliche Fasern, wie z.B. Baumwolle, Zellulose, chemische Fasern, wie z.B. Polyamid, Polypropylen, Polyphenylensulfid, Polyacrylnitril, Polyimid, Polytetrafluorethylen, Aramid oder Polyester, oder Mischungen aus den vorgenannten Substanzen eingesetzt werden. Die Fasern können mechanisch durch Vernadelung oder Wasserstrahlen verfestigt werden, chemisch durch Zugabe von Bindemitteln oder thermisch durch das Erweichen in einem geeigneten Gasstrom, zwischen beheizten Walzen oder auch in einem Dampfstrom.

In einer sehr bevorzugten Auslegung der Erfindung werden Vliese auf Cellulosebasis eingesetzt. Das Flächengewicht der Vliese beträgt bevorzugt zwischen 4 und 100 g/m², besonders bevorzugt zwischen 10 und 70 g/m². Solche Vliese sind z.B. kommerziell von der Firma Glatfelter erhältlich. Die Dicke dieser Vliese beträgt bevorzugt zwischen 20 und 100 µm, äußerst bevorzugt zwischen 30 und 60 µm.

Klebeprodukte mit Permanentträger können auf der Ober- und Unterseite verschieden dicke latentreaktive Klebefilmschichten und/oder bevorzugt latentreaktive Klebefilmschichten unterschiedlicher Art tragen. Kommen verschiedene latentreaktive Klebefilmschichten zum Einsatz dann erfüllen beide die Anforderungen an die latentreaktiven Klebefilme, wie sie oben ausgeführt sind. Auch besteht die Möglichkeit, dass bei solchen Systemen eine der Klebeschichten nicht latentreaktiv ist, sondern z.B. thermoplastisch, hitzeaktivierbar und/oder haftklebrig.

Produkte enthaltend zumindest einen latentreaktiven Klebefilm können auch in zwei- oder mehrschichtiger und permanentträgerfreier Form zum Einsatz kommen. Bevorzugt die oberste und sehr bevorzugt auch die unterste Schicht sind eine Schicht aus latentreaktivem Klebefilm, wobei diese verschieden im Hinblick auf Dicke und/oder Art sein können. Kommen verschiedene latentreaktive Klebefilmschichten zum Einsatz dann erfüllen beide die Anforderungen an die reaktivlatenten Klebefilme, wie sie oben ausgeführt sind. Auch besteht die Möglichkeit, dass bei solchen Systemen eine der z. B. äußeren Klebeschichten nicht latentreaktiv ist, sondern z. B. thermoplastisch, hitzeaktivierbar und/oder haftklebrig.

Mehrschichtige und permanentträgerhaltige Klebeprodukte können Dicken von 50 µm bis 1000 µm, bevorzugt von 75 µm bis 300 µm aufweisen.

Das Produkt kann bahnförmig als Rollenware, als Blattware oder als Stanzling konfektioniert sein. Die latentreaktiven Klebefilme sind bevorzugt bei Raumtemperatur nicht haftklebrig, da das Material so sehr vorteilhaft auch ohne temporären Träger konfektioniert (z. B. gestanzt) und für den Weiterverarbeitungsprozess zur Verfügung gestellt werden kann. Eine haftklebrige Ausgestaltung ist jedoch auch denkbar und vorteilhaft.

Verfahren zur Herstellung der Formulierungen für latentreaktive Klebefilme sind z. B. in der WO 99/29755 A1 oder der EP 1 172 390 A1 beschrieben. Es besteht die Schwierigkeit, dass die Trocknungsbedingungen für die wässrige Dispersion so gewählt werden müssen, dass das latentreaktive Klebesystem unter diesen Voraussetzungen noch nicht anspringt. Siehe zu weiteren Details und einem Lösungsvorschlag Adhäsion, 2007, 51(6), 16-21. Eine Möglichkeit zur Herstellung der latentreaktiven Klebefilme ist der in der WO99/29755 A1 beschriebene Auftrag der wässrigen Dispersion auf einen temporären oder Permanentträger. Der Auftrag erfolgt dabei in der herkömmlichen Weise mittels Rakel oder Düsen. Im Anschluss wird getrocknet. Dies kann in einem Umlaufsystem oder im Trockenkanal erfolgen. Besonders vorteilhaft und in dieser Schrift nicht beschrieben, ist das sogenannte Hängetrocknen, bei dem die Bahnen mäandernd um in zwei Reihen übereinander versetzt angeordnete Stäbe gefahren werden, so dass eine effektive Raumnutzung bei der Trocknung bei gleichzeitig hoher Verweilzeit im Trockner und trotzdem hoher Beschichtungsgeschwindigkeit erreicht wird. Eine nähere Beschreibung der Hängetrocknung ist der EP 2151484 A1 zu entnehmen. Die Beschichtungstemperatur liegt günstigerweise bei Raumtemperatur. Die Trocknungstemperatur übersteigt günstigerweise T(Schmelz)nicht. 45 °C reichen bereits für eine ausreichende Trocknung einer wässrigen Dispersion aus, sofern ausreichender Luftwechsel im Trocknungsprozess und ausreichende Verweilzeit im Trocknungsaggregat gewähreistet ist.

Kommt ein Permanentträger in Form eines Gewebes, Geleges oder Gewirkes, insbesondere eines Vlieses, zum Einsatz, wird das Permanentträgermaterial nach der Beschichtung zum latentreaktiven Klebefilm, bestehend aus Klebeschicht und temporärem Träger, zukaschiert. Der Prozess erfolgt in der Wärme bei einer Temperatur unterhalb der Anspringtemperatur des Reaktivsystems und vorteilhaft bei oder oberhalb der Schmelztemperatur des thermoplastischen Materials. Daher kann es erforderlich sein, den latentreaktiven Klebefilm vor der Kaschierung zu Erwärmen. Dies kann z.B. durch IR-Strahler oder Heizwalzen erfolgen. Wird ein Trägervlies verwendet, kann durch die Wahl der Temperatur sowie des Kaschierdrucks die Eindringtiefe in das Trägervlies variiert werden.

Wird ein Permanentträger verwendet, ist es erforderlich, auch die zweite Seite des Trägers mit einer Klebeschicht zu versehen, um ein doppelseitig klebendes Produkt zu erhalten. In einem zweiten Schritt erfolgt die Beschichtung auf der gegenüberliegenden Seite des Trägermaterials. Hierfür kann analog der Beschichtung des ersten Schrittes vorgegangen werden, wobei dann der erste Strich bestehend aus temporärem Träger, latentreaktivem Klebefilm und Permanentträger in der Wärme zum zweiten Strich zukaschiert wird. Alternativ kann auch der zweite Strich des latentreaktiven Klebefilms direkt auf die andere Seite des Permanentträgers des ersten Strichs erfolgen. Wiederum kann die Penetrationstiefe im, sofern verwendet, Trägervlies durch die Temperatur und den Kaschierdruck variiert werden. Dabei gelten die gleichen Regeln, die für die erste Kaschierung angewendet wurden.

Für die zweite Klebeschicht kann die gleiche Formulierung verwendet werden wie für die erste Klebeschicht. Ebenso ist es möglich, ein anderes latentreaktives Klebesystem zu verwenden oder aber einen Haftkleber einzusetzen. Der geeignete Klebstoff kann in Abhängigkeit des zu verklebenden Substrats ausgewählt werden.

Das erfindungsgemäße Produkt ist im einfachsten Fall aus einer Klebeschicht mit einem temporären Träger aufgebaut. Kommt ein Permanentträger zum Einsatz, sind mindestens zwei Klebeschichten erforderlich. Zusätzlich zu diesem einfachsten Aufbau sind beliebige andere Kombinationen mit zusätzlichen Klebe- und/oder Trägerschichten denkbar. Insbesondere können die jeweiligen Klebeschichten mit einem temporären Träger für den Transport bis zur Verarbeitung geschützt werden.

Die erfindungsgemäße Verwendung betrifft das Verkleben eines eloxierten Aluminiums mit einem Kunststoff. Das eloxierte Aluminium kann verdichtet, unverdichtet und/oder gefärbt sein. Ein Beispiel für ein eloxiertes Aluminium ist E6EV1. Die Kunststoffteile basieren für Konsumgüterelektronikbauteile bevorzugt auf Kunststoffen, die im Spritzguss verarbeitet werden können. So umfassen diese Gruppe z.B. ABS, PC, ABS/PC Blends, PMMA, Polyamide, Glasfaserverstärkte Polyamide, Polyvinylchlorid, Polyvinylenfluorid, Cellulose Acetat, Cycloolefin Copolymere, Flüssigkristallpolymere (LCP), Polylactid, Polyetherketone, Polyetherimid, Polyethersulfon, Polymethacrylmethylimid, Polymethylpenten, Polyphenylether, Polyphenylensulfid, Polyphthalamid, Polyurethane, Polyvinylacetat, Styrol Acrylnitril Copolymere, Polyacrylate bzw. Polymethacrylate, Polyoxymethylen, Acrylester Styrol-Acrylnitril Copolymere, Polyethylen, Polystyrol, Polypropylen oder Polyester (z.B. PBT, PET). Die Aufzählung besitzt keinen Anspruch auf Vollständigkeit. Die Bauteile können jede beliebige Form annehmen, die für die Herstellung eines Bauteils oder Gehäuses für Konsumgüterelektronikartikel erforderlich ist. In der einfachsten Form sind sie planar. Weiterhin sind aber auch 3-dimensionale Bauteile durchaus üblich. Die Bauteile können die verschiedensten Funktionen einnehmen, wie z.B. Gehäuse, Sichtfenster oder Versteifungselement. Sehr bevorzugt handelt es sich bei den verwendeten Kunststoffen um Polycarbonat, PMMA oder ABS.

Die Erfindung stellt somit des Weiteren ein Laminat zur Verfügung, bestehend aus
- einem eloxierten Aluminiumelement,
- einem doppelseitigen Klebeprodukt mit mindestens einer Schicht eines latentreaktiven Klebefilms, der eine thermoplastische Komponente, die eine Schmelztemperatur T(Schmelz) mit 35°C ≤ T(Schmelz) ≤ 90°C, insbesondere 40°C≤ T(Schmelz) ≤ 60°C, aufweist und funktionelle Gruppen enthält, die mit Isocyanat reagieren können, und eine Isocyanat-haltige Komponente, die partikulär, insbesondere feinteilig partikulär, in die thermoplastische Komponente eindispergiert vorliegt und im Bereich der Partikeloberfläche im Wesentlichen desaktiviert ist, wobei die Partikel eine Anspringtemperatur T(Anspring) von 40°C≤ T(Anspring) ≤ 100°C, insbesondere 45°C≤ T(Anspring) ≤ 90°C, besonders bevorzugt 45°C≤ T(Anspring) ≤ 75°C, aufweisen und wobei T(Anspring) ≥ T(Schmelz) ist, enthält, und
- einem Kunststoffsubstrat.

Die Kunststoffteile können lackiert oder anderweitig beschichtet sein. Lacke, die zur Oberflächenfunktionalisierung /-modifizierung von Kunststoffen eingesetzt werden, sind z. B. Antireflex-Beschichtungen, Anti-Fingerprint-Beschichtungen, Antikratz-Beschichtungen oder dekorative Bedruckungen (sog. Backprints). Ferner können Kunststoffe auch mit (anorganischen) Schichten ausgestattet sein wie z. B. leitfähigen Schichten. Hier sei insbesondere Indium-Zinn-Oxid als leitfähige Schicht genannt. Diese Lacke und Schichten weisen zum Teil Thermosensibilität auf und machen daher selbst bereits die Verwendung von bei niedriger Temperatur verarbeitbaren Klebeprodukten erforderlich.

Für eine als Beispiel angeführte Anwendung in Konsumgüterelektronikartikeln werden die Klebeprodukte mit zumindest einer Schicht eines latentreaktiven Klebefilms üblicherweise zu Stanzlingen weiterverarbeitet. Diese werden entweder durch ein Laserschneidverfahren, durch Flachbettstanzen oder durch Rotationsstanzen hergestellt. Der Stanzling hat üblicherweise die Dimension des eloxierten Aluminiumteils, kann aber auch etwas kleiner sein, um leichte Ausquetschprozesse während des Verklebungsprozesses zu erlauben.

Im einfachsten Fall wird der Stanzling des Klebeprodukts mit zumindest einer Schicht eines latentreaktiven Klebefilms ohne temporären Träger manuell, z.B. mit Hilfe einer Pinzette, auf dem eloxierten Aluminiumteil bzw. zwischen den zusammenzufügenden Bauteilen positioniert.

In einer weiteren Ausführung wird der Stanzling des Klebeprodukts mit zumindest einer Schicht eines latentreaktiven Klebefilms nach der Positionierung auf dem eloxierten Aluminium mit einer Wärmequelle behandelt, wodurch sich die Haftung des Stanzlings zum eloxierten Aluminium erhöht. Im einfachsten Fall kann als Wärmequelle ein IR-Strahler, ein Bügeleisen oder eine Heizplatte eingesetzt werden. Für diesen Prozess ist es von Vorteil, wenn der Stanzling noch mit einem temporären Trägermaterial ausgestattet ist, um ein Anhaften des Klebefilms am Werkzeug bzw. der Wärmequelle zu verhindern.

In einer weiteren vorteilhaften Ausgestaltung wird das eloxierte Aluminiumteil auf den Stanzling des Klebeprodukts mit zumindest einer Schicht eines latentreaktiven Klebefilms platziert. Die Platzierung erfolgt auf der offenen Seite. Auf der Rückseite befindet sich noch das temporäre Trägermaterial. Anschließend wird durch eine Wärmequelle Wärme durch das eloxierte Aluminium in das Klebeprodukt mit zumindest einer Schicht eines latentreaktiven Klebefilms eingebracht. Dadurch wird das Klebeprodukt tackig, d.h. klebrig, und haftet stärker am eloxierten Aluminium als an dem temporären Träger. Es wird durch das eloxierte Aluminium geheizt.

Für die Einbringung der Wärme wird in einer bevorzugten Auslegung eine Heizpresse eingesetzt. Der Stempel der Heizpresse ist dabei z.B. aus Aluminium, Messing oder Bronze gefertigt und wird in seiner Ausformung in der Regel den Konturen des Metallteils bzw. den Dimensionen des Stanzlings angepasst. Um eine genaue Positionierung des Stanzlings auf dem eloxierten Aluminiumteil zu gewährleisten, werden in der Regel Formteile eingesetzt, die den Konturen der zu verklebenden Bauteile angepasst sind, wodurch Verrutschungen verhindert werden. Durch Führungsstifte im Formteil und entsprechende Führungslöcher im temporären Trägermaterial des Klebeprodukts mit zumindest einer Schicht eines latentreaktiven Klebefilms kann die exakte Positionierung zwischen Stanzling und eloxiertem Aluminiumteil sichergestellt werden. Andere Positionierungsmöglichkeiten sind denkbar. Nach der Wärmeaktivierung wird das eloxierte Aluminiumteil mit dem auflaminierten Klebeprodukt mit zumindest einer Schicht eines latentreaktiven Klebefilms vom Formteil entfernt. Der gesamte Prozess kann auch in einen automatischen Prozess überführt werden.

Die Erfindung betrifft daher auch ein Verfahren zum Verkleben eines eloxierten Aluminiumteils mit einem Kunststoffteil, umfassend die folgenden Schritte:
a) Fixieren des Kunststoffbauteils auf einem Formbauteil;
b) Platzieren des zu verklebenden eloxierten Aluminiumteils mit einem doppelseitigen Klebeprodukt mit mindestens einer Schicht eines latentreaktiven Klebefilms, der eine thermoplastische Komponente, die eine Schmelztemperatur T(Schmelz) mit 35°C ≤ T(Schmelz) ≤ 90°C, insbesondere 40°C ≤ T(Schmelz) ≤ 60°C, aufweist und funktionelle Gruppen enthält, die mit Isocyanat reagieren können, und eine Isocyanat-haltige Komponente, die partikulär, insbesondere feinteilig partikulär, in die thermoplastische Komponente eindispergiert vorliegt und im Bereich der Partikeloberfläche im Wesentlichen desaktiviert ist, wobei die Partikel eine Anspringtemperatur T(Anspring) von 40°C ≤ T(Anspring) ≤ 100°C, insbesondere 45°C ≤ T(Anspring) ≤ 90°C, besonders bevorzugt 45°C≤ T(Anspring) ≤ 75°C, aufweisen und wobei T(Anspring) ≥ T(Schmelz) ist, enthält, auf dem Kunststoffbauteil;
c) Applizieren von Druck und Temperatur, insbesondere mittels eines Heizpressstempels;
d) Entfernen der verklebten Bauteile aus dem Formbauteil,
wobei zwischen Schritt c) und Schritt d) wahlweise noch eine Rückkühlung durchgeführt werden kann.

In Schritt c) werden Druck und Temperatur appliziert. Dies erfolgt durch einen Heizstempel, der aus einem Material mit guter thermischer Leitfähigkeit besteht. Vorteilhafte Materialien sind z.B. Kupfer, Messing, Bronze oder Aluminium. Es können aber auch andere Metalle oder Legierungen eingesetzt werden. Des Weiteren sollte der Heizpressstempel bevorzugt die Form der Oberseite des Metallteils einnehmen. Diese Form kann wiederum 2-dimensionaler oder 3-dimensionaler Natur sein. Der Druck wird vorteilhafter Weise über einen Pneumatikzylinder aufgebracht. Die Applizierung muss aber nicht unbedingt über Luftdruck erfolgen. Auch sind z.B. hydraulische Pressvorrichtungen oder elektromechanische Stellantriebe z.B. über Spindeln möglich. Des Weiteren kann es von Vorteil sein, mehrfach Druck und Temperatur einzubringen, um z.B. durch Reihenschaltung oder Rotationsprinzip den Prozessdurchsatz zu erhöhen. Die Heizpressstempel müssen in diesem Fall nicht alle mit der gleichen Temperatur und/ oder gleichem Druck betrieben werden. Weiterhin können auch die Kontaktzeiten der Stempel unterschiedlich gewählt werden.

### Zu den angegebenen Prüfmethoden:

### Push-out-Test:

Der Push-out-Test ermöglicht Aussagen über die Verklebungsfestigkeit eines doppelseitig klebenden Klebeprodukts in Richtung der Klebschichtnormalen. Dazu wird ein kreisförmiges Kunststoffsubstrat mit Durchmesser 21 mm mit dem zu untersuchenden Klebeprodukt auf einem Metallrahmen verklebt. Der Metallrahmen weist eine kreisförmige Bohrung mit Durchmesser 9 mm. Das Klebeprodukt hat ebenfalls einen Durchmesser von 21 mm und wird entsprechend zugeschnitten oder gestanzt. Als Kunststoffsubstrat kommt eine PC-Platte zum Einsatz. Das Format der Metallplatte überragt das Format der Kunststoffplatte, so dass der Verbund mittels der überstehenden Bereiche der Metallplatte auf einen Auflegetisch platziert werden kann.

Mittels eines zylindrischen Stempels (Durchmesser 7 mm), der in eine Zugprüfmaschine eingespannt ist, wird durch das Metallloch auf die Kunststoffplatte gedrückt und so eine Kraft auf die Klebefuge ausgeübt. Die Prüfgeschwindigkeit liegt bei 10 mm/s. Aufgenommen wird diejenige Kraft, bei der das Kunststoffsubstrat vom Metallrahmen abgelöst wird. Die Kraft wird auf die Stempelfläche bezogen, so dass Push-out-Festigkeiten in Einheiten von N/mm² resultieren. Der Klebeproduktprüfling besteht die Messung, wenn die Push-out-Festigkeit oberhalb 1 N/mm² liegt. Das Prüfklima ist 23 °C und 50 % relative Feuchtigkeit.

### Feucht/Wärme-Lagerung:

Für die Feucht/Wärme-Lagerung werden verklebte Laminate in einen Klimaschrank, z.B. von der Fa. Weiss, gelegt, der bei 60 °C und 95 % relativer Luftfeuchtigkeit betrieben wird. Die Einlagerdauer liegt bei 72 Stunden.

Folgendermaßen erfüllen Kunststoff-eloxiertes Aluminium-Laminate die gestellte Aufgabe:

| | |
|---|---|
| Verklebungstemperatur, T(Anspring) | ≤ 100 °C, bevorzugt ≤ 90°C, mehr bevorzugt ≤ 75 °C |
| Push-out-Test (frisch) | > 1 N/mm² |
| Push-out-Test nach 1 Woche 60 °C / 95 % rel. Feuchtigkeit | > 1 N/mm² |

### Beispiele:

Beispiel 1: Ein latent-reaktiver Klebefilm wurde hergestellt aus 100 Teilen Dispercoll U XP 2682, 13 Teilen Dispercoll BL XP 2514 und 1,5 Teilen Borchigel 0625. Die Formulierungsbestandteile wurden als wässrige Dispersion in einem Becherglas mit einem Ankerrührer bei 60 1/min über einen Zeitraum von 15 min bei Raumtemperatur vermischt. Der Feststoffgehalt wurde durch Zugabe von demineralisiertem Wasser auf 46 Gew.-% eingestellt.

Mittels eines Laborstreichtischs wurde mit einem Rakel eine Beschichtung auf beidseitig Polyethylen-beschichtetem und silikonisiertem Papier hergestellt. Resultierende Lappenmuster wurden zunächst bei Raumtemperatur für 30 min abgelüftet und anschließend im Umlufttrockenschrank bei 45 °C für 20 min getrocknet. Die Muster wiesen eine Schichtdicke von 100 µm auf.

Aus dem einschichtigen Klebefilm wurden mittels eines Stanzeisens kreisrunde Klebebandstanzlinge mit einem Durchmesser von 21 mm erzeugt. Jeweils einer wurde zwischen ein Kunststoff (Polycarbonat-Disk)- und ein Substrat eloxierten Aluminiums(E6EV1) platziert und in einer Laborheizpresse bei 80 °C Stempeltemperatur und 3 bar für 120 s verpresst.

Der Push-out Test ergab für das Frischmuster 2,6 N/mm² und für das bei 60 °C und 95 % Luftfeuchtigkeit gelagerte Muster 1,1 N/mm².

Beispiel 2: Ein latent-reaktiver Klebefilm wurde hergestellt aus 100 Teilen Dispercoll U XP 2702, 11 Teilen Dispercoll BL XP 2514 und 1,5 Teilen Borchigel 0625. Die Formulierungsbestandteile wurden als wässrige Dispersion in einem Becherglas mit einem Ankerrührer bei 60 1/min (60 Umdrehungen pro Minute) über einen Zeitraum von 15 min bei Raumtemperatur vermischt. Der Feststoffgehalt wurde durch Zugabe von demineralisiertem Wasser auf 46 Gew.-% eingestellt.

Mittels eines Laborstreichtischs wurde mit einem Rakel eine Beschichtung auf beidseitig Polyethylen-beschichtetem und silikonisiertem Papier hergestellt. Resultierende Lappenmuster wurden zunächst bei Raumtemperatur für 30 min abgelüftet und anschließend im Umlufttrockenschrank bei 45 °C für 20 min getrocknet. Die Muster wiesen eine Schichtdicke von 100 µm auf.

Aus dem einschichtigen Klebefilm wurden mittels eines Stanzeisens kreisrunde Klebebandstanzlinge mit einem Durchmesser von 21 mm erzeugt. Jeweils einer wurde zwischen ein Kunststoff (Polycarbonat-Disk)- und ein Substrat eloxierten Aluminiums (E6EV1) platziert und in einer Laborheizpresse bei 90 °C Stempeltemperatur und 3 bar für 120 s verpresst.

Der Push-out Test ergab für das Frischmuster 2,2 N/mm² und für das bei 60 °C und 95 % Luftfeuchtigkeit gelagerte Muster 1,9 N/mm².

Beispiel 3: Ein latent-reaktiver Klebefilm wurde hergestellt aus 100 Teilen Dispercoll U 56, 20 Teilen Aqualink D und 1,5 Teilen Borchigel 0625. Die Formulierungsbestandteile wurden als wässrige Dispersion in einem Becherglas mit einem Ankerrührer bei 60 1/min über einen Zeitraum von 15 min bei Raumtemperatur vermischt. Der Feststoffgehalt wurde durch Zugabe von demineralisiertem Wasser auf 46 Gew.-% eingestellt.

Mittels eines Laborstreichtischs wurde mit einem Rakel eine Beschichtung auf beidseitig Polyethylen-beschichtetem und silikonisiertem Papier hergestellt. Resultierende Lappenmuster wurden zunächst bei Raumtemperatur für 30 min abgelüftet und anschließend im Umlufttrockenschrank bei 45 °C für 20 min getrocknet. Die Muster wiesen eine Schichtdicke von 100 µm auf.

Aus dem einschichtigen Klebefilm wurden mittels eines Stanzeisens kreisrunde Klebebandstanzlinge mit einem Durchmesser von 21 mm erzeugt. Jeweils einer wurde zwischen ein Kunststoff (Polycarbonat-Disk)- und ein Substrat eloxierten Aluminiums (E6EV1) platziert und in einer Laborheizpresse bei 90 °C Stempeltemperatur und 3 bar für 240 s verpresst.

Der Push-out Test ergab für das Frischmuster 1,9 N/mm² und für das bei 60 °C und 95 % Luftfeuchtigkeit gelagerte Muster 1,5 N/mm².

## Patentansprüche

1. Verwendung eines Produktes mit mindestens einer Schicht eines latentreaktiven Klebefilms, der eine thermoplastische Komponente, die eine Schmelztemperatur T(Schmelz) mit 35°C ≤ T(Schmelz) ≤ 90°C, insbesondere 40°C ≤ T(Schmelz) ≤ 60°C, aufweist und funktionelle Gruppen enthält, die mit Isocyanat reagieren können, und eine Isocyanat-haltige Komponente, die partikulär in die thermoplastische Komponente eindispergiert vorliegt und im Bereich der Partikeloberfläche im Wesentlichen desaktiviert ist, wobei die Partikel eine Anspringtemperatur T(Anspring) von 40°C ≤ T(Anspring) ≤ 100°Caufweisen und wobei T(Anspring) ≥ T(Schmelz) ist, enthält, zur Verklebung von eloxiertem Aluminium mit Kunststoff.

2. Verwendung nach Anspruch 1, **dadurch gekennzeichnet, dass** die Partikel eine Anspringtemperatur T(Anspring) von 45°C ≤ T(Anspring) ≤ 90°C, insbesondere von 45°C ≤ T(Anspring) ≤ 75°C aufweisen.

3. Verwendung nach Anspruch 1 oder 2, **dadurch gekennzeichnet, dass** T(Anspring) > T(Schmelz) ist.

4. Verwendung nach einem der Ansprüche 1 bis 3, **dadurch gekennzeichnet, dass** die thermoplastische Komponente eine mit OH- und/oder NH₂-Gruppen funktionalisierte Verbindung ist.

5. Verwendung nach einem der Ansprüche 1 bis4, **dadurch gekennzeichnet, dass** die Schichtdicke des latentreaktiven Klebefilms zwischen 10 µm und 500 µm, insbesondere zwischen 20 µm und 250 µm beträgt.

6. Verwendung nach einem der Ansprüche 1 bis 5, **dadurch gekennzeichnet, dass** das Produkt des Weiteren mindestens einen temporären Träger und/oder mindestens einen Permanentträger umfasst.

7. Verwendung nach Anspruch 6, **dadurch gekennzeichnet, dass** der mindestens eine Permanentträger eine Folie, ein Papier, ein Gelege, ein Gewebe, ein Gestricke oder ein Gewirke ist, wobei die Oberfläche des Trägers chemisch und/oder physikalisch vorbehandelt sein kann.

8. Verwendung nach Anspruch 6, **dadurch gekennzeichnet, dass** der mindestens eine temporäre Träger eine ein- oder beidseitige ausgerüstete, insbesondere silikonisierte Trennfolie oder ein ein- oder beidseitig ausgerüstetes, insbesondere silikonisiertes, Trennpapier ist.

9. Verwendung nach einem der Ansprüche 1 bis 8, **dadurch gekennzeichnet, dass** der latentreaktive Klebefilm bei Raumtemperatur haftklebrig ist.

10. Verwendung nach einem der Ansprüche 1 bis 8, **dadurch gekennzeichnet, dass** der latentreaktive Klebefilm bei Raumtemperatur nicht haftklebrig ist.

11. Verwendung nach einem der Ansprüche 1 bis 10, **dadurch gekennzeichnet, dass** das Produkt mehrschichtig ist und/oder einen Permanentträger aufweist, wobei das Produkt eine Dicke von 50 µm bis 1000 µm, insbesondere von 75 µm bis 300 µm aufweist.

12. Verwendung nach einem der Ansprüche 1 bis 11, **dadurch gekennzeichnet, dass** der Permanentträger vor der Beschichtung chemisch oder physikalisch vorbehandelt wird.

13. Laminat bestehend aus
- einem eloxierten Aluminiumelement,
- einem doppelseitigen Klebeprodukt mit mindestens einer Schicht eines latentreaktiven Klebefilms, der eine thermoplastische Komponente, die eine Schmelztemperatur T(Schmelz) mit 35°C ≤ T(Schmelz) ≤ 90°C, insbesondere 40°C ≤ T(Schmelz) ≤ 60°C, aufweist und funktionelle Gruppen enthält, die mit Isocyanat reagieren können, und eine Isocyanat-haltige Komponente, die partikulär in die thermoplastische Komponente eindispergiert vorliegt und im Bereich der Partikeloberfläche im Wesentlichen desaktiviert ist, wobei die Partikel eine Anspringtemperatur T(Anspring) von 40°C ≤ T(Anspring) ≤ 100°C, insbesondere 45°C ≤ T(Anspring) ≤ 90°C, aufweisen und wobei T(Anspring) ≥ T(Schmelz) ist, enthält, und
- einem Kunststoffsubstrat.

14. Verfahren zum Verkleben eines eloxierten Aluminiumteils mit einem Kunststoffteil, umfassend die folgenden Schritte:
a) Fixieren des Kunststoffbauteils auf einem Formbauteil;
b) Platzieren des zu verklebenden eloxierten Aluminiumteils mit einem doppelseitigen Klebeprodukt mit mindestens einer Schicht eines latentreaktiven Klebefilms, der eine thermoplastische Komponente, die eine Schmelztemperatur T(Schmelz) mit 35°C ≤ T(Schmelz) ≤ 90°C, insbesondere 40°C ≤ T(Schmelz) ≤ 60°C, aufweist und funktionelle Gruppen enthält, die mit Isocyanat reagieren können, und eine Isocyanat-haltige Komponente, die partikulär in die thermoplastische Komponente eindispergiert vorliegt und im Bereich der Partikeloberfläche im Wesentlichen desaktiviert ist, wobei die Partikel eine Anspringtemperatur T(Anspring) von 40°C ≤ T(Anspring) ≤ 100°C, insbesondere 45°C ≤ T(Anspring) ≤ 90°C, besonders bevorzugt 45°C ≤ T(Anspring) ≤ 75°C, aufweisen und wobei T(Anspring) ≥ T(Schmelz) ist, enthält, auf dem Kunststoffbauteil;
c) Applizieren von Druck und Temperatur, insbesondere mittels eines Heizpressstempels;
d) Entfernen der verklebten Bauteile aus dem Formbauteil,
wobei zwischen Schritt c) und Schritt d) wahlweise noch eine Rückkühlung durchgeführt werden kann.

## Claims

1. Use of a product having at least one layer of a latently reactive adhesive film which comprises a thermoplastic component, which has a melting temperature T(melt) where 35°C ≤ T(melt) ≤ 90°C, more particularly 40°C ≤ T(melt) ≤ 60°C, and which comprises functional groups that are able to react with isocyanate, and an isocyanate-containing component, which is present in particulate dispersion in the thermoplastic component and is substantially deactivated in the region of the particle surface, the particles having an onset temperature T(onset) of 40°C ≤ T(onset) ≤ 100°C, and with T(onset) ≥ T(melt), for adhesively bonding eloxed aluminum to plastic.

2. Use according to Claim 1, **characterized in that** the particles have an onset temperature T(onset) of 45°C ≤ T (onset) ≤ 90°C, more particularly of 45°C ≤ T(onset) ≤ 75°C.

3. Use according to Claim 1 or 2, **characterized in that** T(onset) > T(melt).

4. Use according to any of Claims 1 to 3, **characterized in that** the thermoplastic component is a compound functionalized with OH and/or NH₂ groups.

5. Use according to any of Claims 1 to 4, **characterized in that** the layer thickness of the latently reactive adhesive film is between 10 µm and 500 µm, more particularly between 20 µm and 250 µm.

6. Use according to any of Claims 1 to 5, **characterized in that** the product further comprises at least one temporary carrier and/or at least one permanent carrier.

7. Use according to Claim 6, **characterized in that** the at least one permanent carrier is a foil, a paper, a scrim, a woven fabric or a knitted fabric or knit, it being possible for the surface of the carrier to have been chemically and/or physically pretreated.

8. Use according to Claim 6, **characterized in that** the at least one temporary carrier is a single- or double-sidedly furnished, more particularly siliconized, release foil or a single-sidedly or double-sidedly furnished, more particularly siliconized, release paper.

9. Use according to any of Claims 1 to 8, **characterized in that** the latently reactive adhesive film is tacky at room temperature.

10. Use according to any of Claims 1 to 8, **characterized in that** the latently reactive adhesive film is nontacky at room temperature.

11. Use according to any of Claims 1 to 10, **characterized in that** the product is multilayer and/or has a permanent carrier, the product having a thickness of 50 µm to 1000 µm, more particularly of 75 µm to 300 µm.

12. Use according to any of Claims 1 to 11, **characterized in that** the permanent carrier is chemically or physically pretreated prior to coating.

13. Laminate consisting of
- an eloxed aluminum element,
- a double-sided adhesive product having at least one layer of a latently reactive adhesive film which comprises a thermoplastic component, which has a melting temperature T(melt) where 35°C ≤ T(melt) ≤ 90°C, more particularly 40°C ≤ T(melt) ≤ 60°C, and which comprises functional groups that are able to react with isocyanate, and an isocyanate-containing component, which is present in particulate dispersion in the thermoplastic component and is substantially deactivated in the region of the particle surface, the particles having an onset temperature T(onset) of 40°C ≤ T(onset) ≤ 100°C, more particularly 45°C ≤ T(onset) ≤ 90°C, and with T(onset) ≥ T(melt), and
- a plastics substrate.

14. Method for adhesively bonding an eloxed aluminum part to a plastics part, comprising the following steps:
a) fixing the plastics component on a shaping component;
b) placing the eloxed aluminum part to be bonded, with a double-sided adhesive product having at least one layer of a latently reactive adhesive film which comprises a thermoplastic component, which has a melting temperature T(melt) where 35°C ≤ T(melt) ≤ 90°C, more particularly 40°C ≤ T(melt) ≤ 60°C, and which comprises functional groups that are able to react with isocyanate, and an isocyanate-containing component, which is present in particulate dispersion in the thermoplastic component and is substantially deactivated in the region of the particle surface, the particles having an onset temperature T(onset) of 40°C ≤ T(onset) ≤ 100°C, more particularly 45°C ≤ T(onset) ≤ 90°C, more preferably 45°C ≤ T(onset) ≤ 75°C, and with T(onset) ≥ T(melt), on the plastics component;
c) applying pressure and temperature, in particular by means of a heating press ram;
d) removing the bonded components from the shaping component,
it being possible alternatively for cooling as well to be carried out between step c) and step d) .

## Revendications

1. Utilisation d'un produit comprenant au moins une couche d'un film adhésif réactif latent, qui contient un composant thermoplastique, qui présente une température de fusion T(fusion) selon 35 °C ≤ T(fusion) ≤ 90 °C, notamment 40 °C ≤ T(fusion) ≤ 60 °C, et contient des groupes fonctionnels qui peuvent réagir avec les isocyanates, et un composant contenant des isocyanates, qui se présente sous forme particulaire dispersée dans le composant thermoplastique, et est essentiellement désactivé dans la zone de la surface des particules, les particules présentant une température de démarrage T(démarrage) selon 40 °C ≤ T(démarrage) ≤ 100 °C, avec T(démarrage) ≥ T(fusion), pour le collage d'aluminium anodisé avec une matière plastique.

2. Utilisation selon la revendication 1, **caractérisée en ce que** les particules présentent une température de démarrage T(démarrage) selon 45 °C ≤ T(démarrage) ≤ 90 °C, notamment selon 45 °C ≤ T(démarrage) ≤ 75 °C.

3. Utilisation selon la revendication 1 ou 2, **caractérisée en ce que** T(démarrage) > T(fusion).

4. Utilisation selon l'une quelconque des revendications 1 à 3, **caractérisée en ce que** le composant thermoplastique est un composé fonctionnalisé avec des groupes OH et/ou NH₂.

5. Utilisation selon l'une quelconque des revendications 1 à 4, **caractérisée en ce que** l'épaisseur de couche du film adhésif réactif latent est comprise entre 10 µm et 500 µm, notamment entre 20 µm et 250 µm.

6. Utilisation selon l'une quelconque des revendications 1 à 5, **caractérisée en ce que** le produit comprend en outre au moins un support temporaire et/ou au moins un support permanent.

7. Utilisation selon la revendication 6, **caractérisée en ce que** l'au moins un support permanent est une feuille, un papier, un non-tissé, un tissu, un tricot ou un tissu à mailles, la surface du support pouvant être prétraitée chimiquement et/ou physiquement.

8. Utilisation selon la revendication 6, **caractérisée en ce que** l'au moins un support temporaire est une feuille de séparation traitée d'un ou des deux côtés, notamment siliconée, ou un papier de séparation traité d'un ou des deux côtés, notamment siliconé.

9. Utilisation selon l'une quelconque des revendications 1 à 8, **caractérisée en ce que** le film adhésif réactif latent est adhésif par contact à température ambiante.

10. Utilisation selon l'une quelconque des revendications 1 à 8, **caractérisée en ce que** le film adhésif réactif latent n'est pas adhésif par contact à température ambiante.

11. Utilisation selon l'une quelconque des revendications 1 à 10, **caractérisée en ce que** le produit est multicouche et/ou comprend un support permanent, le produit présentant une épaisseur de 50 µm à 1 000 µm, notamment de 75 µm à 300 µm.

12. Utilisation selon l'une quelconque des revendications 1 à 11, **caractérisée en ce que** le support permanent est prétraité chimiquement ou physiquement avant le revêtement.

13. Stratifié, constitué par :
- un élément en aluminium anodisé,
- un produit adhésif double face comprenant au moins une couche d'un film adhésif réactif latent, qui contient un composant thermoplastique, qui présente une température de fusion T(fusion) selon 35 °C ≤ T(fusion) ≤ 90 °C, notamment 40 °C ≤ T(fusion) ≤ 60 °C, et contient des groupes fonctionnels qui peuvent réagir avec les isocyanates, et un composant contenant des isocyanates, qui se présente sous forme particulaire dispersée dans le composant thermoplastique, et est essentiellement désactivé dans la zone de la surface des particules, les particules présentant une température de démarrage T(démarrage) selon 40 °C ≤ T(démarrage) ≤ 100 °C, notamment 45 °C ≤ T(démarrage) ≤ 90 °C, avec T(démarrage) ≥ T(fusion), et
- un substrat en matière plastique.

14. Procédé de collage d'une pièce en aluminium anodisée avec une pièce en matière plastique, comprenant les étapes suivantes :
a) la fixation du composant en matière plastique sur un composant de moulage ;
b) le placement de la pièce en aluminium anodisée à coller avec un produit adhésif double face comprenant au moins une couche d'un film adhésif réactif latent, qui contient un composant thermoplastique, qui présente une température de fusion T(fusion) selon 35 °C ≤ T(fusion) ≤ 90 °C, notamment 40 °C ≤ T(fusion) ≤ 60 °C, et contient des groupes fonctionnels qui peuvent réagir avec les isocyanates, et un composant contenant des isocyanates, qui se présente sous forme particulaire dispersée dans le composant thermoplastique, et est essentiellement désactivé dans la zone de la surface des particules, les particules présentant une température de démarrage T(démarrage) selon 40 °C ≤ T(démarrage) ≤ 100 °C, notamment 45 °C ≤ T(démarrage) ≤ 90 °C, de manière particulièrement préférée 45 °C ≤ T(démarrage) ≤ 75 °C, avec T(démarrage) ≥ T(fusion), sur le composant en matière plastique ;
c) l'application de pression et de température, notamment au moyen d'un poinçon de presse à chaud ;
d) le retrait des composants collés du composant de moulage,
un refroidissement en circuit fermé pouvant éventuellement encore être réalisé entre l'étape c) et l'étape d).
